(19) Europäisches Patentamt
European Patent Office
Office européen des brevets

(11) **EP 2 826 031 B1**

## (12) EUROPÄISCHE PATENTSCHRIFT

(45) Veröffentlichungstag und Bekanntmachung des Hinweises auf die Patenterteilung:
**28.06.2017 Patentblatt 2017/26**

(21) Anmeldenummer: **13710315.6**

(22) Anmeldetag: **06.03.2013**

(51) Int Cl.:
***G08G 1/16*** *(2006.01)*

(86) Internationale Anmeldenummer:
**PCT/EP2013/054456**

(87) Internationale Veröffentlichungsnummer:
**WO 2013/135535 (19.09.2013 Gazette 2013/38)**

(54) **VERFAHREN ZUR STAUERKENNUNG MITTELS EINER DRAHTLOSEN FAHRZEUG-ZU-FAHRZEUG-KOMMUNIKATION**

METHOD FOR DETECTING TRAFFIC JAMS USING A WIRELESS VEHICLE-TO-VEHICLE COMMUNICATION SYSTEM

PROCÉDÉ POUR LA DÉTECTION D'UN EMBOUTEILLAGE AU MOYEN D'UNE COMMUNICATION SANS FIL VOITURE-À-VOITURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2012 DE 102012204098**

(43) Veröffentlichungstag der Anmeldung:
**21.01.2015 Patentblatt 2015/04**

(73) Patentinhaber: **Continental Automotive GmbH 30165 Hannover (DE)**

(72) Erfinder:
• **LOTZ, Andreas**
**35580 Wetzlar (DE)**
• **PU, Hongjun**
**35606 Solms (DE)**
• **ZHANG, Fa**
**Shanghai 200052 (CN)**

(56) Entgegenhaltungen:
WO-A1-2010/028626    DE-A1-102005 050 277
US-A1- 2007 027 610    US-A1- 2008 065 311

**Beschreibung**

Die Erfindung betrifft ein Verfahren zur Stauerkennung mittels einer drahtlosen Fahrzeug-zu-Fahrzeug-Kommunikation, bei dem ein Ego-Fahrzeug, in dem das Verfahren zur Stauerkennung durchgeführt wird, Geschwindigkeits- und Positionswerte von im Empfangsgebiet der Fahrzeug-zu-Fahrzeug-Kommunikation befindlichen Umgebungsfahrzeugen empfängt.

Bei der Fahrzeug-zu-Fahrzeug-Kommunikation handelt es sich um einen Teil der Fahrzeug-zu-Umgebung-Kommunikation. Dabei tauscht ein Fahrzeug durch Senden und Empfangen von Nachrichten Informationen mit seiner Umgebung aus. Die Nachrichten betreffen zumeist auch fahrzeugspezifische Werte, die in einem einzelnen Fahrzeug vor dem Senden beispielsweise durch Sensoren erfasst oder auf andere Weise gewonnen werden und anschließend gespeichert werden. Im Allgemeinen können die Nachrichten daher insbesondere auch jegliche Art von Informationen oder Werten beinhalten, die den Fahrzeugzustand charakterisieren. Es kann sich beispielsweise um Geschwindigkeits- und Positionswerte handeln, aber auch andere Werte oder Informationen, die spezifisch für eine Fahrsituation sind, wie den Lenkwinkel, oder auch Werte, die nicht spezifisch für eine Fahrsituation sind und andere Eigenschaften des Fahrzeuges betreffen, wie beispielsweise den Fahrzeugtyp.

Nach dem gegenwärtigen Stand der Entwicklung ist es in der Fahrzeug-zu-Fahrzeug-Kommunikation vorgesehen, die bestimmten Werte und Informationen in einem standardisierten Verfahren zusammenzustellen und in einer ebenfalls standardisierten Nachricht aufzubereiten. Bei dem zugrundeliegenden Standard handelt es sich beispielsweis um den ITS-Standard. Dabei steht ITS für die Abkürzung des englischen Begriffs "Intelligent Transportation System". So wird erreicht, dass die Nachrichten universell, also auch von anderen Fahrzeugen beispielsweise unabhängig von dem Herstellertyp, empfangbar sind.

Weiter ist es gemäß dem ITS-Standard vorgesehen, diese Nachrichten entweder kontinuierlich, d. h. in definierten, mehr oder weniger kurzen, Zeitabständen oder in Abhängigkeit von einem Ereignis auszusenden. Die kontinuierlichen Nachrichten werden im Rahmen des ITS-Standards auch als "Cooperative Awareness Messages" oder kurz CAM-Nachrichten bezeichnet. Die CAM-Nachrichten werden ungerichtet und periodisch, also ähnlich einem Leuchtfeuer, von einem Fahrzeug ausgesendet und können von jedem entsprechend konfigurierten anderen Fahrzeug im Empfangsgebiet empfangen werden.

Das Aussenden der Nachrichten erfolgt über verschiedene drahtlose Kommunikationswege. Standardmäßig ist in dem ITS-Standard vorgesehen, die Nachrichten auf einem WLAN basierten Funkkanal auszutauschen. Es können allerdings auch andere Funkkanäle insbesondere zum Senden der Nachrichten verwendet werden. So ist beispielsweise aus der WO 2009/074655 A1 ein Verfahren bekannt, bei dem ein weiterer Funkkanal verwendet wird, um besonders relevante Nachrichten zu versenden. Bei dem zusätzlichen Funkkanal handelt es sich um den Funkkanal, der bei einem drahtlosen Zugangs- und Berechtigungssystem Anwendung findet.

Ferner ist es bei der Fahrzeug-zu-Fahrzeug-Kommunikation vorgesehen, bestimmte Nachrichten in Abhängigkeit von einem eintretenden Ereignis auszusenden. Diese Nachrichten sind als DENM ("Decentralized Environmental Notification Messages") bekannt. Entsprechend dem ITS-Standard werden derartige Nachrichten bei einem plötzlich eintretenden Ereignis, wie beispielsweise einem Unfall, ausgesendet. So können Fahrzeuge, die sich in der Umgebung von dem die DENM-Nachrichten aussendenden Fahrzeug, d. h. in dem Empfangsgebiet um dieses Fahrzeug, befinden vor diesem Ereignis gewarnt werden. Durch die DENM-Nachrichten können beispielsweise Fahrzeuge über einen Unfall informiert werden, der vor ihnen stattgefunden hat.

Allerdings bedingt das Aussenden einer DENM-Nachricht häufig das Eintreten eines plötzlichen, zeitlich und räumlich unvorhersehbaren Ereignisses. Es gibt jedoch Verkehrssituationen, in denen eine kritische Situation durch eine kontinuierliche Veränderung der Situation eines Fahrzeuges oder einer Gruppe von Fahrzeugen entsteht. So kann sich beispielsweise der Verkehrsfluss auf einer Fahrbahn lediglich durch die Anzahl der Fahrzeuge auf dieser Fahrbahn ändern. Demnach können kritische Situationen ohne ein vorhergehendes plötzliches Ereignis auftreten, auch ohne dass eine DENM-Nachricht ausgesendet wird. Außerdem setzt das Aussenden einer DENM-Nachricht im Hinblick auf ein Stau-Ende voraus, dass das Fahrzeug bereits in dem Stau steht oder diesen bereits erkannt hat.

Zusätzlich können auch Situationen eintreten, in denen sich der Verkehrsfluss dadurch verändert, dass Verkehrsteilnehmer, die nicht an der Fahrzeug-zu-Fahrzeug-Kommunikation teilnehmen, am Fahrzeuggeschehen teilnehmen und dieses beeinflussen. Es kann sich dabei beispielsweise um Fußgänger oder um andere, nicht mit einem entsprechenden Kommunikationssystem ausgerüstete Fahrzeuge handeln. So kommt es im Stadtverkehr oder auf Autobahnen häufig vor, dass sich das Verkehrsaufkommen kontinuierlich erhöht und so ein zähfließender Verkehr oder ein Stau entsteht. Diese Verkehrssituationen zeichnen sich durch eine zumeist deutlich reduzierte Durchschnittsgeschwindigkeit der Fahrzeuge aus. Im Falle eines Staus kann es zu einem vollständigen Stillstand der Fahrzeuge kommen, bei dem die Geschwindigkeit der Fahrzeuge bei null liegt. Bei einer derartigen kontinuierlichen Veränderung des Verkehrsflusses liegt kein plötzliches kritisches Ereignis vor, durch das der nachfolgende Verkehr gewarnt würde. Insbesondere führt die schrittweise Verlangsamung des Verkehrsflusses nicht oder zumindest verspätet, dazu, dass eine DENM-Nachricht ausgesendet wird.

Es ist jedoch wünschenswert, dass der Fahrer eines Fahrzeuges von einer derartigen Veränderung frühzeitig informiert wird, gerade weil eine der häufigsten Ursachen für einen Unfall im Straßenverkehr das Auftreten eines Staus und dort insbesondere das Stauende ist. Das Stauende stellt das Bindeglied zwischen dem normal fließenden Verkehr, der sich beispielsweise mit der Richtgeschwindigkeit auf Autobahnen fortbewegt, und dem Stau dar, d. h. im Extremfall stehenden Fahrzeugen. Somit sind die Geschwindigkeitsunterschiede der Fahrzeuge im Bereich des Stauendes groß. Daraus folgt eine deutlich erhöhte Wahrscheinlichkeit für einen Unfall. Verstärkt werden kann dies durch geographische Gegebenheiten, wie einen komplizierten und unübersichtlichen Straßenverlauf, schlechte Sichtverhältnisse, die Witterung im Allgemeinen oder hohe Geschwindigkeiten der Fahrzeuge im normal fließenden Verkehr vor dem Ende des Staus.

Gegenwärtig existieren bereits verschiedenen Möglichkeiten, die Fahrer eines Fahrzeuges vor einem Stau bzw. Stauende zu warnen. Diese lassen sich grob in zwei Systeme unterteilen. In dem ersten System wird versucht, das Verkehrsaufkommen auf den Straßen gleichmäßig zu verteilen. Sie zielen daher auf eine möglichst frühzeitige Information des Fahrers ab. Die zweiten Systeme haben das Ziel, aktiv in das Fahrgeschehen einzugreifen. Hierdurch wird angestrebt, einen Unfall zu vermeiden oder zumindest die Unfallfolgen zu reduzieren.

Eine Möglichkeit zur frühzeitigen Information des Fahrers besteht beispielsweise darin, ihn mittels Wechselbeschilderungen oder Informationsbrücken über einen kommenden Stau zu informieren. Diese können am Fahrbahnrand installiert sein und eventuell auch Ausweichrouten empfehlen. Hierdurch wird der Fahrer so früh vor dem Stau gewarnt, dass er seine Fahrtroute entsprechend anpassen kann. Beispielsweise kann er die nächste Abfahrt einer Autobahn nutzen und über eine Landstraße ausweichen. Derartige Verkehrsleitsysteme überwachen den Verkehr entweder durch Sensoren in bzw. an der Fahrbahn, oder es erfolgt eine manuellen Beobachtung des Verkehrs. Daher sind die Installation und/oder der Betrieb kostenintensiv und aufwendig. Dies führt dazu, dass sie zumeist auf Ballungszentren beschränkt sind und auch dort den Verkehr meist nur grobmaschig überwachen.

Ebenso auf eine frühzeitige Warnung zielen die klassischen Verkehrsansagen im Radio. Die Ansagen sind zwar großflächig verfügbar, ermöglichen dem Fahrer jedoch nur eine grobe Orientierung. Mittlerweile werden zusätzlich zu den Verkehrsansagen auch Daten über Radiofrequenzen übertragen, wie etwa der RDS ("Radio Data System") Service. In den letzten Jahren wurden die Verbreitung und Verfügbarkeit derartiger Verkehrsinformationen deutlich verbessert. So erfolgt teilweise eine direkt Anbindung der Verkehrsinformationen an fahrzeuginterne Navigationssysteme über TMC ("Traffic Message Channel"). Dadurch kann eine räumliche und zeitliche Präzision erreicht werden, die es dem Fahrer selbständig oder mit Hilfe des Navigationssystems ermöglicht, eine verbesserte Route aufzufinden. Der Erfolg hängt jedoch stark von der Qualität der empfangenen Verkehrsinformation ab. Die zeitliche und räumliche Präzision reicht häufig jedoch nicht aus, um aktiv in das Fahrgesehen einzugreifen. Andere Verfahren zur Stauerkennung oder Ermittlung von Verkehrsbedingungen basierend auf einer Fahrzeug-zu-Fahrzeug Kommunikation sind z.B. aus den Dokumenten WO2010/028626 und US2008/0065311 bekannt. Durch Fahrerassistenzsysteme kann die Fahrsituation des Fahrzeuges beeinflusst werden. Dazu wird die Umgebung beispielsweise durch fahrzeugeigene Sensoren überwacht. Die Fahrerassistenzsysteme arbeiten daher autonom. Erkennt das Fahrerassistenzsystem eine kritische Verkehrssituation, warnt es entweder den Fahrer visuell und/oder akustisch und empfiehlt beispielsweise das Einleiten eines Bremsvorganges. Einige Systeme erlauben mittlerweile auch den direkten Eingriff in das Fahrgeschehen, beispielsweise durch das Einleiten eines selbständigen Bremsvorganges. Die verwendeten Sensoren, wie beispielsweise Radar oder Lidar, sind prinzipiell langreichweitig, wobei jedoch Abschottungseffekte auftreten können. Das bedeutet, dass ein entferntes Fahrzeug zwar auf freier Strecke erfasst werden kann, es jedoch unter Umständen nicht oder nicht vollständig erfasst wird, wenn sich dazwischen ein weiteres Objekt befindet. Ebenso kann ein Fahrzeug nicht erfasst werden, das sich hinter einer Kuppe befindet. Daher ist die Reichweite im Straßenverkehr zumeist eingeschränkt. In dichtem Verkehr kann die Reichweite so auch auf das unmittelbar benachbarte Fahrzeug beschränkt sein. Derartige Fahrerassistenzsysteme sind teuer und warnen den Fahrer lediglich vor einer plötzlichen Gefahr. Sie stoßen im dichten Verkehr aber an ihre Grenzen.

Es ist daher Aufgabe der vorliegenden Erfindung, ein Verfahren zur frühzeitigen Erkennung eines Staus in einem Fahrzeug bereitzustellen, dass sich durch eine verbesserte (insbesondere räumliche und zeitliche) Präzision auszeichnet.

Diese Aufgabe wird mit einem Verfahren zur Stauerkennung mittels einer drahtlosen Fahrzeug-zu-Fahrzeug-Kommunikation nach Anspruch 1 gelöst. Das Verfahren wird in einem Ego-Fahrzeug, bzw. in dem dafür vorgesehenen Steuergerät des Ego-Fahrzeuges, durchgeführt. Dazu werden Geschwindigkeits- und Positionswerte von Umgebungsfahrzeugen, die sich in Empfangsreichweite der Fahrzeug-zu-Fahrzeug-Kommunikation befinden und vorzugsweise kontinuierlich, d. h. fortdauernd in bestimmten eingestellten bzw. einstellbaren Zeitabständen und ihre Geschwindigkeits- und Positionswerte aussenden, von dem Ego-Fahrzeug vorzugsweise in gleicher Weise kontinuierlich empfangen. Die kontinuierlich ausgesendeten und empfangenen Werte sind beispielsweise entsprechend den im ITS-Standard definierten CAM-Nachrichten abgefasst. In diesen Standardnachrichten überträgt ein Fahrzeug seine dynamischen Daten, wie insbesondere Position, Geschwindigkeit und Fahrtrichtung ("Heading").

Das erfindungsgemäße Verfahren gliedert sich in mehrere Verfahrensschritte.

Zuerst wird die Relevanz der Umgebungsfahrzeuge festgestellt, von denen das Ego-Fahrzeug (A) Nachrichten empfängt. Allgemein geschieht dies durch Vergleich von Daten des Umgebungsfahrzeugs mit vorgegebenen Relevanzkriterien, wobei ein Fahrzeug als relevant eingestuft wird, für das vorgegebene Relevanzkriterien erfüllt sind. Ein mögliches Relevanzkriterium kann beispielsweise im Definieren eines Relevanzgebietes liegen, wobei die Zugehörigkeit des Umgebungsfahrzeugs zu dem Relevanzgebiet überprüft wird.

Beispielsweise kann ein Relevanzgebiet in Fahrtrichtung vor dem Ego-Fahrzeug definiert werden. Das Relevanzgebiet erstreckt sich dann über einen Bereich, der bevorzugter weise deutlich größer als die Sichtweite des Fahrers des Ego-Fahrzeugs ist. Dies ist besonders dann vorteilhaft, wenn die Sichtweite des Fahrers beispielsweise aufgrund von geographischen Gegebenheiten merklich eingeschränkt ist, wie es beispielsweise in kurvigen oder bergigen Regionen der Fall ist. Die Größe des Relevanzgebietes ist technisch limitiert durch die Reichweite der ausgesendeten Nachrichten, die wiederum durch die verwendete Technologie begrenzt ist. Die Form des Relevanzgebietes kann erfindungsgemäß auch in Abhängigkeit des Straßenverlaufs angepasst werden. Als geometrisch einfache Form kann das Relevanzgebiet beispielsweise die Form eines Viereckes aufweisen, insbesondere auf einer geraden Straße.

Bei komplexer Straßentopologie ist es häufig so, dass nicht jedes Umgebungsfahrzeug potentiellen Einfluss auf das Ego-Fahrzeug hat. Eine feine Nachprüfung der Relevanz eines sendenden Umgebungsfahrzeugs für das Ego-Fahrzeug kann mit den in der DE 10 2010 007 262 A1 präsentierten Verfahren sehr effektive durchgeführt werden.

Im folgenden Text wird der Begriff "Relevanzgebiet" daher als ein Bereich des Straßennetzwerkes verstanden, das die Relevanzkriterien der Relevanzprüfung erfüllt. In dem Relevanzgebiet kann Verhalten jedes Umgebungsfahrzeugs potentiellen Einfluss auf das Ego-Fahrzeug haben. Das Relevanzgebiet kann, muss aber nicht durch eine Gebietsauswahl vorgebbar bzw. vorgegeben sein.

Anhand der empfangenen Nachrichten werden im nächsten Schritt die den Umgebungsfahrzeugen zugeordneten Geschwindigkeits- und Positionswerte ausgewählt, deren Positionswerte im Relevanzgebiet liegen (d. h., es werden nur die Positions- und Geschwindigkeitswerte der relevanten Umgebungsfahrzeuge berücksichtigt) und deren Geschwindigkeitswerte in eine zu dem Ego-Fahrzeug gleiche Fahrtrichtung zeigen. Dazu ist es vorgesehen bzw. notwendig, dass die Geschwindigkeitswerte als gerichtete Informationen vorliegen. Dies ist beispielsweise eine CAM-Nachricht, die sowohl die Geschwindigkeit als auch das Heading des sendenden Fahrzeuges beinhaltet. Beispielsweise kann dies auch dadurch erreicht werden, dass die Geschwindigkeit direkt als Geschwindigkeitsvektor gesendet und erfasst wird, oder dass die Geschwindigkeit durch Angabe der Geschwindigkeitskomponenten in einem Koordinatensystem als Geschwindigkeitsvektor darstellbar ist. Bei dem Koordinatensystem kann es sich vorzugsweise um ein universell verwendetes Koordinatensystem handeln, das beispielsweise auch von einem satellitenbasierten Ortungssystem verwendet wird. In diesem Koordinatensystem kann die Position der Fahrzeuge durch Angabe des aus Längen- und Breitengrad bestehenden 2-Tupels (L, B) dargestellt werden. Auch eine übliche Koordinatenangabe mit x- und y-Werten, bezogen auf einen definierten Koordinatenursprung, ist natürlich möglich. Wenn sowohl die Geschwindigkeitskomponenten als auch die Koordinaten des Ego-Fahrzeuges in diesem einen Koordinatensystem vorliegen, kann die Geschwindigkeit einfach als Vektor dargestellt werden. Die Geschwindigkeitskomponenten können dabei entweder als absolute Werte vorliegen oder relativ zu dem Ego-Fahrzeug angegeben sein. Vorteilhafterweise wird das Ego-Fahrzeug als das Zentrum bzw. der Ursprung des Koordinatensystems angesehen bzw. definiert. In diesem Fall werden dem Ego-Fahrzeug die Koordinaten $L = 0$, $B = 0$ bzw. $x = 0$, $y = 0$ zugewiesen. Ebenso werden die Koordinaten der Umgebungsfahrzeuge dementsprechend, falls sie als absolute Werte vorliegen, relativ zu dem Ego-Fahrzeug dargestellt.

Ferner werden dem Ego-Fahrzeug seine aktuellen Geschwindigkeits- und Positionswerte zugeordnet, d. h., diese Geschwindigkeits- und Positionswerte werden im Rahmen des Verfahrens erfasst, so dass sie zur Verfügung stehen. Diese Werte stehen in den meisten Fahrzeugen ohnehin als abrufbare Daten innerhalb eines Fahrzeug-Kommunikationssystems zur Verfügung.

In dem nächsten Verfahrensschritt wird mindestens ein erstes virtuelles Fahrzeug definiert, dem die Mittelwerte eines Teils der oder aller ausgewählten Geschwindigkeits- und Positionswerte als Geschwindigkeits- und Positionswerte des virtuellen Fahrzeugs zugeordnet werden. Ein erstes virtuelle Fahrzeug kann also einen Teil der oder alle sich im Relevanzgebiet befindlichen Umgebungsfahrzeuge repräsentieren, zumindest im Hinblick auf deren Position und Geschwindigkeit.

In einem weiteren Verfahrensschritt werden die zeitlichen Verläufe der Geschwindigkeits- und Positionswerte des virtuellen Fahrzeugs erfasst. So können beispielsweise für das erste virtuelle Fahrzeug, für ein virtuelles Fahrzeug oder für mehrere oder alle virtuellen Fahrzeuge die Geschwindigkeits- und Positionswerte zu verschiedenen Zeiten erfasst und zumindest temporär gespeichert werden. Analog können auch die Geschwindigkeits- und Positionswerte für das Ego-Fahrzeug in ihrem zeitlichen Verlauf zumindest temporär abgespeichert werden. Ferner können die Positions- und Geschwindigkeitswerte auch lediglich für eine vorgegebene Anzahl von Zeitpunkten gespeichert werden. Vorzugsweise werden die Werte für mindestens drei unterschiedliche Zeitpunkte gespeichert.

In dem nächsten Schritt wird der zeitliche Verlauf der Änderungen der Geschwindigkeits- und Positionswerte des virtuellen Fahrzeugs bzw. mehrere oder aller virtuellen Fahrzeuge, als mindestens ein Änderungswert erfasst, insbesondere durch Vergleich von bestimmten Werten zu verschiedenen Zeitpunkten. Die Änderungen können dabei absolut oder relativ zueinander oder auch relativ zu dem Ego-Fahrzeug erfasst werden. Es kann ferner vorgesehen werden, die erfassten Geschwindigkeits- und Positionswerte ohne Zwischenspeichern direkt zu verarbeiten und anstatt der eigentlichen Geschwindigkeits- und Positionswerte lediglich die in diesem Verfahrensschritt ermittelten Änderungswerte zu speichern. Die Erfassung und Weiterverarbeitung nur des Änderungswertes reduziert sowohl den Speicherbedarf als auch die Anforderung an die Bandbreite der Übertragung und ist zugleich rechenökonomischer. Gegebenenfalls kann auch vorgesehen sein, den zeitlichen Verlauf der Geschwindigkeits- und Positionswerte oder der Änderungswerte des Ego-Fahrzeuges zu erfassen.

Die ermittelten Änderungswerte können im Anschluss mit mindestens einem vorgegebenen Staukriterium verglichen werden, wobei als Ergebnis des Vergleichs eine Stauwarnung erzeugt werden kann, wenn ein Stau erkannt wurde.

Dieses Verfahren ermöglicht das frühzeitige Erkennen eines Staus in der Umgebung eines Ego-Fahrzeuges. Durch das Erfassen von Nachrichten, die von Fahrzeugen in der direkten Umgebung des Ego-Fahrzeuges ausgesendet werden, wird eine hohe zeitliche und räumliche Präzision erreicht. Durch die im Vergleich zu dem Sensorerfassungsbereich bekannter Fahrerassistenzsysteme vergleichsweise lange Reichweite der Fahrzeug-zu-Fahrzeug-Kommunikation kann der Fahrer des Ego-Fahrzeuges vor einem Stau gewarnt werden, bevor sich das Ego-Fahrzeug selbst in dem Stau befindet bzw. in den Gefährdungsbereich vor dem Stauende einfährt. Ebenso kann das Verfahren vor einem Stau warnen, der sich noch in den Anfängen seiner Formation befindet und sich lediglich in dem kollektiven Verhalten der Umgebungsfahrzeuge zeigt. Ebenfalls ist es so möglich, die Information über den erkannten Stau schnell zu verbreiten, um nachfolgende Fahrzeuge vor dem Stau zu warnen. Dies kann beispielsweise durch das Aussenden einer DENM-Nachricht geschehen.

In Weiterentwicklung dieses Gedankens kann erfindungsgemäß vorgesehen werden, dass in einem auch als erstes bezeichneten virtuellen Fahrzeug alle ausgewählten Geschwindigkeits- und Positionswerte erfasst werden. Hierdurch wird das Relevanzgebiet, das sich vor dem Fahrzeug aufspannt, durch lediglich ein virtuelles Fahrzeug abgebildet. Dieses Verfahren stellt eine besonders rechenökonomische, aber auch grobe Methode dar, um einen eventuellen Stau festzustellen.

Zur Verfeinerung dieser Methode kann vorgesehen sein, in einem anderen, auch als zweites bezeichneten, virtuellen Fahrzeug eine Teilauswahl der ausgewählten Geschwindigkeits- und Positionswerte zu erfassen, wozu insbesondere eine vorgegebene Anzahl derjenigen Geschwindigkeits- und Positionswerte herangezogen wird, deren Positionswerte den größten Abstand zu dem Ego-Fahrzeug aufweisen. Dieses Verfahren wird bevorzugt eingesetzt, wenn die Gesamtanzahl der ausgewählten Umgebungsfahrzeuge und deren Geschwindigkeits- und Positionswerte größer als eine vorgegebene Gesamtanzahl, beispielsweise mehr als fünf Umgebungsfahrzeuge, beträgt. Durch das zweite virtuelle Fahrzeug, das eine Teilauswahl der Fahrzeuge vorzugsweise am äußeren zu dem Ego-Fahrzeug entfernten Rand des Relevanzgebietes darstellt, wird ein Pseudo-Sensor zur Verfügung gestellt, der das "Sichtfeld" des Ego-Fahrzeuges deutlich ausdehnt. Ferner wird durch das Zusammenfassen einer vorgegebenen und daher auch limitierten Anzahl an Fahrzeugen erreicht, dass die Geschwindigkeits- und Positionswerte, die dem zweiten virtuellen Fahrzeug zugeordnet werden, die tatsächlich vorliegende Fahrzeugsituation eines einzelnen Umgebungsfahrzeuges mit einer höheren Wahrscheinlichkeit genauer abbilden. Zugleich wird dadurch jedoch auch eine Statistik erreicht, durch die eventuelle fehlerhafte Daten wenigstens teilweise ausgeglichen werden. Bei den so zu einem zweiten virtuellen Fahrzeug zusammengefassten Fahrzeugen kann es sich beispielsweise um eine Teilauswahl von drei Fahrzeugen handeln.

Durch die zwei vorbeschriebenen virtuellen Fahrzeuge kann der Verkehrsfluss in dem Relevanzgebiet erfahrungsgemäß übersichtlich und für eine Stauerkennung mit hoher Genauigkeit abgebildet werden.

In Weiterentwicklung dieses Verfahrens kann es vorgesehen sein, dass aus dem Positionswert des Ego-Fahrzeuges und dem Positionswert eines Umgebungsfahrzeuges, insbesondere eines Umgebungsfahrzeugs im Relevanzgebiet des Ego-Fahrzeuges, der Abstand zu dem Ego-Fahrzeug bestimmt wird. Der so ermittelte Abstand wird dann dazu verwendet, die Geschwindigkeits- und Positionswerte der Umgebungsfahrzeuge nach ab- oder ansteigendem Abstand in einer Tabelle zu sortieren und zu speichern. Durch das Bilden einer derart sortierten Tabelle werden die Umgebungsfahrzeuge übersichtlich dargestellt und für eine Weiterverarbeitung vorbereitet. Am Anfang bzw. Ende der Tabelle stehen demnach die Fahrzeuge, die sich am weitesten von dem Ego-Fahrzeug entfernt befinden und bei denen sich ein Stau in Fahrtrichtung des Ego-Fahrzeugs daher am frühsten in den Positions- und Geschwindigkeitswerten zeigt. In der Tabelle können neben dem Abstand beispielsweise auch die Positions- und Geschwindigkeitswerte sowie deren zeitlicher Verlauf mit abgespeichert werden. Somit erlaubt die Tabelle einen schnellen und einfachen Zugriff auf Fahrzeuge, die in der nahen Zukunft besonders relevant für die Vorhersage eines Staus sind. Eine solche Tabelle vereinfacht erfindungsgemäß auch das Definieren des vorgesehenen mindestens einen virtuellen Fahrzeugs bzw. der mehreren virtuellen Fahrzeuge.

In Weiterentwicklung der Erfindung kann als ein möglicher Änderungswert die Beschleunigung eines virtuellen Fahrzeugs ermittelt werden. Da die Beschleunigung der zeitlichen Ableitung der Geschwindigkeit entspricht, ist erfindungsgemäß insbesondere vorgesehen, die Beschleunigung anhand des vorher erfassten zeitlichen Verlaufes der Geschwindigkeitswerte zu bestimmen. Die Beschleunigung wird so anhand von zwei zeitlich aufeinanderfolgenden Geschwindigkeitswerten eines virtuellen Fahrzeuges unter Berücksichtigung des zeitlichen Abstands zwischen der Erfassung der aufeinander folgenden Geschwindigkeitswerte berücksichtigt. Das Erfassen der Beschleunigung der relevanten Umgebungsfahrzeuge ist ein wesentliches Merkmal, um einen Stau zu detektieren. Am Ende des Staus treffen die Fahrzeuge des normal fließenden Verkehrs und die des stehenden Verkehrs (Stau) aufeinander. Dort gleicht sich ihre Geschwindigkeit auf sehr kurzer Distanz an. Dieser Geschwindigkeitsangleich zeigt sich zwangsläufig in der Beschleunigung (bzw. Verzögerung als Beschleunigung mit negativem Vorzeichen) der Fahrzeuge, so dass durch Ermitteln der vorzeichenbehafteten Beschleunigung ein Stau bzw. ein sich gerader formender Stau zuverlässig festgestellt werden kann, beispielsweise durch Vergleich mit einem geeignet festgelegten Staukriterium.

Ferner kann der zeitliche Verlauf der so erfassten Beschleunigung ebenfalls in der obigen Tabelle abgespeichert werden. Hierdurch wird die Dynamik der Beschleunigung eines virtuellen Fahrzeuges erfasst und zeitlich abgebildet. Dies entspricht der zweiten Ableitung der Geschwindigkeit. Dadurch wird es möglich, eine gefährliche Situation wie einen Stau anhand einer zeitlichen Analyse der Beschleunigung einfach zu erfassen. Es kann so erfindungsgemäß ein gesamtes Beschleunigungsmuster, also beispielsweise ein zeitlich lang anhaltender Bremsvorgang, erkannt werden.

In Weiterbildung dieses Gedanken kann der Änderungswert Beschleunigung mit einem Schwellenwert, der als ein Staukriterium dient, verglichen werden. Es ist insbesondere bevorzugt, als Schwellenwert für die Beschleunigung einen Wert heranzuziehen, der kleiner oder gleich null ist. Eine solche negative Beschleunigung geht mit einer Verringerung der Geschwindigkeit einher und wird, wie erwähnt, auch als Verzögerung bezeichnet. Eine Verzögerung kennzeichnet daher einen Bremsvorgang. Somit kann dieser Wert herangezogen werden um festzustellen, ob sich ein virtuelles Fahrzeug, also eine Agglomeration an Umgebungsfahrzeugen, in einem kollektiven Bremsmanöver befindet oder ob diese stehen. Durch das Verwenden eines Schwellenwertes wird das Verfahren robuster gegen Fehler. Dadurch können beispielsweise leichte Bremsvorgänge, die erfahrungsgemäß nicht auf einen Stau zurückzuführen sind, von der Stauerkennung unberücksichtigt bleiben.

Basierend auf dieser Ausführungsform können auch die höheren Ableitungen der Geschwindigkeit als Änderungswert herangezogen werden. Die zeitliche Änderung der Beschleunigung, also die zweite Ableitung der Geschwindigkeit, zeigt eine Dynamik in der Beschleunigung an. Dadurch können Fahrzeugsituationen angezeigt werden in denen ein Fahrzeug erst schwach und dann stark abbremst. Dies ist ein Fahrverhalten, das häufig in plötzlichen und unerwarteten Situationen zu beobachten ist.

Auf diesem Gedanken aufbauend, kann der zeitliche Versatz der Beschleunigung bzw. des Beschleunigungsverlaufs der virtuellen Fahrzeuge als ein weiterer Änderungswert berücksichtigt werden. Dieser vorteilhaften Ausführungsform liegt die Erkenntnis zugrunde, dass die Verzögerungen der virtuellen Fahrzeuge einen ähnlichen, aber zeitlich versetzten, Verlauf aufweisen, sobald sich die Fahrzeuge einem Stau nähern. Die Ähnlichkeit der zeitlichen Verläufe der Beschleunigungen rührt daher, dass die Fahrzeuge zeitversetzt ähnliche Verkehrssituationen durchlaufen. Hierdurch werden die Fahrer der Fahrzeuge in ähnlicher Weise zu einem vergleichbaren Bremsmanöver motiviert, jedoch jeweils mit einem Zeitversatz, bis das jeweilige Fahrzeug am Stauende angekommen ist. Dies kann unter anderem auf das Auftreten eines gemeinsamen Hindernisses zurückzuführen sein. Der zeitliche Versatz der Verläufe rührt daher, dass sich Umgebungsfahrzeuge, und damit die virtuellen Fahrzeuge als Gruppe von Umgebungsfahrzeugen, an verschiedenen räumlichen Positionen befinden. Somit variiert auch der räumliche Abstand zu dem möglichen Stau und daher der Zeitpunkt, an dem die Verzögerung eintritt. Bei dieser Verfahrensvariante kann erfindungsgemäß analysiert werden, bei welchem virtuellen Fahrzeug die Verzögerung zuerst einsetzt. Definitionsgemäß befindet sich das zweite virtuelle Fahrzeug weiter entfernt von dem Ego-Fahrzeug als das erste virtuelle Fahrzeug. Es besteht daher eine Wahrscheinlichkeit für einen Stau, wenn die Verzögerung des zweiten virtuellen Fahrzeugs vor der Verzögerung des ersten virtuellen Fahrzeuges erfolgt. Anschaulich folgt der zeitliche Versatz der Verzögerung daraus, dass der Fahrer eines Fahrzeugs in unmittelbarer Nähe zum Stau diesen früher erkennt und daher früher bremst. Somit ist es durch die Analyse des zeitlichen Versatzes der Beschleunigung möglich, die Reaktionen eines vorausfahrenden Fahrers in dem Verfahren zu berücksichtigen. Dieses Verfahren kann noch dadurch verfeinert werden, dass mehrere virtuelle Fahrzeuge definiert werden, deren zugrundeliegende Umgebungsfahrzeuge jeweils bestimmte Abstandsintervalle zu dem Ego-Fahrzeug einhalten.

In Weiterentwicklung des erfindungsgemäßen Gedankens ist es erfindungsgemäß möglich, dass als ein anderer oder zusätzlicher Änderungswert die Summe der Abstände mindestens eines virtuellen Fahrzeuges, vorzugsweise aber zweier virtueller Fahrzeuge, zu dem Ego-Fahrzeug und/oder zu einem anderen virtuellen Fahrzeug gebildet wird, und dass dieser Änderungswert im Staukriterium berücksichtigt wird. Die Abstände der Fahrzeuge können aus den Positionswerten ermittelt werden, die den Fahrzeugen zugeordnet sind. Das bedeutet, dass bei nur einem virtuellen Fahrzeug die Summe der Abstände genau dem Abstand zwischen dem Ego-Fahrzeug und dem virtuellen Fahrzeug entspricht. Bevorzugt wird es, wenn als erster Summand der obigen Summe der Abstand zwischen dem Ego-Fahrzeug und dem ersten virtuellen und als zweiter Summand der Abstand zwischen dem ersten zu dem zweiten virtuellen Fahrzeug verwendet wird.

Vorzugsweise kann auch hier vorgesehen sein, dass der zeitliche Verlauf dieses Änderungswertes, d. h. der Summe der Abstände, analysiert wird. Folgt aus einer derartigen Analyse, dass sich die Summe der Abstände mit fortschreitender Zeit reduziert, so kann dies auf einen Stau hinweisen. Diesem Merkmal liegt die Erkenntnis zugrunde, dass die Abstände zwischen den einzelnen Fahrzeugen in Abhängigkeit von der Geschwindigkeit einen bestimmten Wert einnehmen, und dass dieser Wert positiv mit der Geschwindigkeit korreliert. Dies ist unter anderem in dem geschwindigkeitsabhängigen Sicherheitsabstand zwischen den Fahrzeugen begründet. Daraus folgt, dass die Abstände bei einer hohen Geschwindigkeit groß und bei niedriger Geschwindigkeit klein sind. Eine Analyse der Summe der Abstände zwischen den Fahrzeugen im zeitlichen Verlauf kann daher ein Indiz für eine verringerte Geschwindigkeit bzw. für das Auftreten eines Staus sein.

In Weiterentwicklung dieses Gedankens kann als ein anderer oder zusätzlicher Änderungswert ein erwartetes Stauende für ein virtuelles Fahrzeug abgeschätzt und in einem Staukriterium berücksichtigt werden. Im Rahmen dieser Erfindung wird unter dem Begriff "Stau" eine Agglomeration (Gruppe oder Ansammlung) von Fahrzeugen verstanden, die sich mit einer Geschwindigkeit im Bereich der Schrittgeschwindigkeit fortbewegt. Im Allgemeinen wird dann von einem Stau gesprochen, wenn die Geschwindigkeit länger als eine Minute unterhalb von 10 km/h liegt. Möglich wäre auch eine Definition, nach der die Geschwindigkeit einer Agglomeration von Fahrzeugen im Durchschnitt maximal im Bereich der Schrittgeschwindigkeit (kleiner als 10 Stundenkilometer) liegt. Von einem stockenden Verkehr wird dann gesprochen, wenn die Geschwindigkeit in einem Bereich von 10 km/h bis 30 km/h liegt. Im Rahmen dieser Erfindung kann allerdings auch ein stockender oder zähflüssiger Verkehr als Stau bezeichnet werden.

Das Ende einer derartigen, einen Stau bildenden Agglomeration von Fahrzeugen kann örtlich meist nicht genau festgestellt werden, da ständig neue Fahrzeuge auf den Stau auftreffen und sich der gesamte Stau zumeist in Fahrtrichtung fortbewegt. Zusätzlich verlassen Fahrzeuge den Stau auch nach vorne, beispielsweise wenn sie das stauerzeugende Ereignis passiert haben. Allerdings existiert nicht immer ein stauerzeugendes Ereignis. Es kann teilweise auch vorkommen, dass sich ein Stau aufgrund eines erhöhten Aufkommens an Fahrzeugen bildet. Dies tritt beispielsweise dann ein, wenn die Fahrzeugaufnahmekapazität der Fahrbahn überschritten wird. Aufgrund des fließenden Überganges zwischen dem normalen Verkehr und dem Stauende und der Eigenbewegung des Staus ist es zwar nicht möglich, das Stauende exakt zu definieren. Die Positionen der virtuellen Fahrzeuge konvergieren jedoch erfahrungsgemäß zu einer Position, die als ungefähres Stauende angesehen werden kann.

Zur Berechnung dieses Stauendes im Sinne der Erfindung kann daher vorgesehen werden, dass aus der Beschleunigung des virtuellen Fahrzeugs und der Annahme, dass das virtuelle Fahrzeug mit dieser Beschleunigung bis zum Stillstand abbremst, ein Warnabstand berechnet wird. Der Warnabstand gibt die Entfernung der zugeordneten Position des virtuellen Fahrzeugs bis zu einem möglichen Stillstand des virtuellen Fahrzeugs an. Das erwartete Stauende wird dann aus dem Warnabstand und dem Abstand des Ego-Fahrzeugs zu dem virtuellen Fahrzeug ermittelt. Dieses so ermittelte erwartete Stauende wird vorzugsweise als eine absolute Position gespeichert, hierdurch wird die Mittelwertbildung bei Vorliegen von mehreren möglichen erwarteten Stauenden erleichtert. Diese Art der Berechnung stellt eine rechenökonomische Möglichkeit dar, ein Stauende zu berechnen. Erfindungsgemäß kann vorgesehen sein, für alle virtuellen Fahrzeuge und/oder Umgebungsfahrzeuge das erwartete Stauende zu berechnen. Die Berechnung des Stauendes wird noch genauer, wenn das Stauende für die virtuellen Fahrzeuge zu verschiedenen Zeiten erfasst und analysiert wird. Durch diese vorzugsweise kontinuierliche Berechnung des Stauendes für jedes Zeitintervall ist eine schrittweise Konvergenz des abgeschätzten Stauendes zum tatsächlichen Stauende zu erwarten. Dies lässt sich so begründen, dass das Bremsenverhalten eines sich einem Stau nähernden Fahrzeuges mit dem abnehmenden Abstand zu dem Stauende zuverlässigere Informationen für die Stauendeabschätzung liefert. Weiter kann durch die kontinuierliche Berechnung eine dynamische Verschiebung des exakten Stauendes mit berücksichtigt werden. Eine derartige Verschiebung des Stauendes tritt beispielsweise bei dem rückwärts gerichteten Stauaufbau ebenso wie bei der vorwärts gerichteten Stauauflösung ein.

Vorzugsweise werden die derart errechneten Stauendpositionen als absolute Werte gespeichert. Dadurch wird eine zeitliche Betrachtung erleichtert. Insbesondere ist es so leicht möglich, das Stauende auf eine zeitliche Konvergenz hin zu analysieren.

Vorzugsweise kann vorgesehen sein, dass alle Änderungswerte, also die Geschwindigkeitsabnahme der virtuellen Fahrzeuge, die Analyse der Summe der Abstände zwischen den virtuellen Fahrzeugen und dem Ego-Fahrzeug und die Berechnung des Stauende als verschiedene oder kombinierte Staukriterien berücksichtigt werden. Sobald alle ausgewählten bzw. eine definierte Auswahl bestimmter Staukriterien erfüllt sind, wird die Situation als Stau erkannt.

In Weiterentwicklung des erfindungsgemäßen Verfahrens ist es erfindungsgemäß möglich, eine Genauigkeit, mit der Geschwindigkeits- und Positionswerte der Umgebungsfahrzeuge erfasst werden, zu ermitteln und diese Genauigkeit bei der Ermittlung der Mittelwerte der dem virtuellen Fahrzeugen zugewiesenen Geschwindigkeits- und Positionswerte zu berücksichtigen. Die Genauigkeit kann von den Umgebungsfahrzeugen selbst ermittelt und zusammen mit den Geschwindigkeits- und Positionswerte übertragen werden. Ferner kann die Genauigkeit auch anhand der Art der Datenerfassung ermittelt werden. So weisen beispielsweise die Positionsdaten, die von einem globalen Satellitennavigationssystem erfasst werden, eine Unschärfe auf.

Die Erfindung betrifft auch eine Vorrichtung, insbesondere ein Steuergerät, zur Stauerkennung in einem Ego-Fahrzeug. Die Vorrichtung weist ein Kommunikationssystem, vorzugsweise für die drahtlose Fahrzeug-zu-Fahrzeug-Kommunikation auf, das mit Umgebungsfahrzeugen in einem Empfangsgebiet um das Ego-Fahrzeug Informationen, wie beispielsweise CAM-Nachrichten, austauscht. Ferner weist die Vorrichtung eine Recheneinheit auf, die zur Durchführung des vorbeschriebenen Verfahrens oder Teilen hiervon eingerichtet ist. Durch ein derartig eingerichtetes und daher "intelligentes" On-Board-System kann die Verkehrssituation "Stau" zuverlässig erkannt werden.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschrieben und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:

Fig. 1    schematisch eine Verkehrssituation auf einer mehrspurigen Fahrbahn mit einem Ego-Fahrzeug und mehreren Umgebungsfahrzeugen;

Fig. 2    schematisch eine Verkehrssituation auf einer mehrspurigen Fahrbahn mit dem Ego-Fahrzeug und mehreren virtuellen Fahrzeugen;

Fig. 3    schematisch eine Verkehrssituation wie in Fig. 2, jedoch zu einem späteren Zeitpunkt;

Fig. 4    einen Graph der Stauendposition über der Zeit.

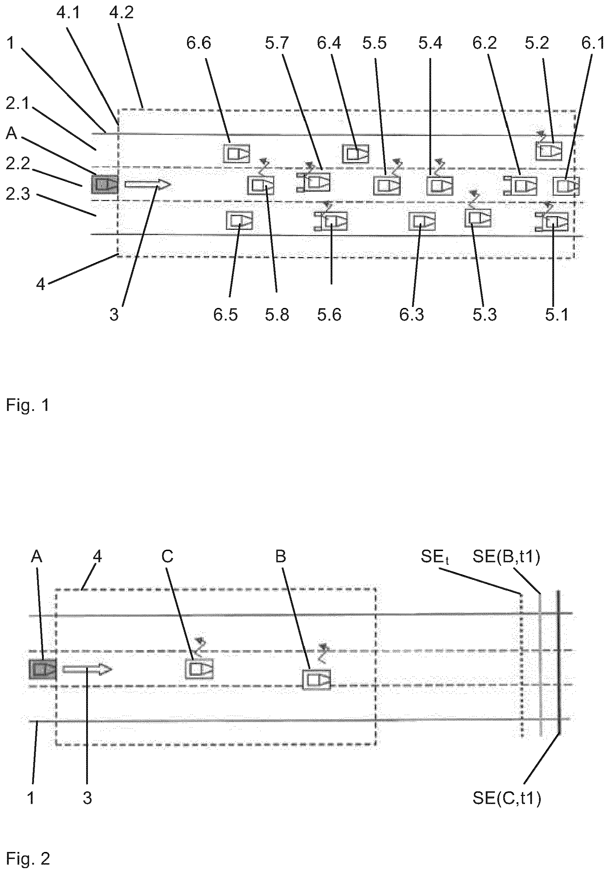

Ein Fahrzeug, in dem ein Verfahren zur Stauerkennung durchgeführt wird und das nachfolgend als Ego-Fahrzeug A bezeichnet wird, befindet sich in der in Fig. 1 dargestellten Verkehrssituation auf einer mehrspurigen Fahrbahn 1, die drei Fahrspuren 2.1, 2.2 und 2.3 aufweist. Dort bewegt es sich auf der mittleren Fahrspur 2.2 in Fahrtrichtung 3. Vor dem Ego-Fahrzeug A liegt ein Relevanzgebiet 4, das im Fall der dargestellten geraden Fahrbahn die Form eines Viereckes einnimmt und in dem sich mehrere Umgebungsfahrzeuge 5.1 bis 5.8 und 6.1 bis 6.6 befinden. Allgemein wird das Relevanzgebiet aber durch das Erfüllen von Relevanzkriterien definiert, ohne dass es sich im allgemeinen Fall um ein geschlossen darstellbares geometrisches Gebilde handeln muss.

Im dargestellten, die Erfindung nicht begrenzenden Fall weist das Relevanzgebiet eine seitliche Ausdehnung 4.1 und eine Ausdehnung in Fahrtrichtung 4.2 auf. Die seitliche Ausdehnung 4.1 des Relevanzgebietes 4 erstreckt sich über die Fahrspuren 2.1, 2.2 und 2.3 und erfasst auch Bereiche außerhalb der Fahrspuren, so dass auch etwaige Seitenstreifen oder Trennstreifen abgedeckt werden. Der Seitenstreifen erstreckt sich neben der Fahrspur 2.3 und wird auf Autobahnen oder Schnellstraßen zumeist als Notfallstreifen oder Pannenstreifen bezeichnet. Der Trennstreifen trennt gegenläufige Fahrbahnen bei Autobahnen oder Schnellstraßen voneinander und liegt - bei Rechtsverkehr - neben der Fahrspur 2.1. Durch das Erfassen des Seitenstreifens im Relevanzgebiet 4 wird sichergestellt, dass Fahrzeuge, die sich beispielsweise neben der Fahrbahn 1 befinden und auf diese einschwenken, ebenfalls erfasst werden. Dies tritt unter anderem bei Auf- und/oder Abfahrten von Autobahnen oder bei gefährlichen Stauendsituationen auf.

Die Ausdehnung des Relevanzgebietes 4 in Fahrtrichtung 4.2 erstreckt sich über mehrere Fahrzeugabstände und wird im Wesentlichen begrenzt durch den Empfangsbereich der drahtlosen Fahrzeug-zu-Fahrzeug-Kommunikation, an der das Ego-Fahrzeug (A) und die dargestellten Umgebungsfahrzeuge 5.1 bis 5.8 teilnehmen. Im vorliegenden Fall ist das Relevanzgebiet als Rechteck ausgebildet und weist in Fahrtrichtung 4.2 eine Länge von 600 m auf und seitlich zur Fahrtrichtung eine Breite von 50 m, ohne dass die Erfindung auf diese typischen Abmessungen beschränkt wäre. In Abhängigkeit von den geografischen Gegebenheiten und den Anforderungen für die Stauerkennung wird das Relevanzgebiet je nach Situation anders definiert und an die aktuellen Gegebenheiten angepasst werden. Beispielsweise kann das Relevanzgebiet in einer Kurve dem Kurvenverlauf folgen und daher eine gekrümmte Form aufweisen.

Die Umgebungsfahrzeuge 5.x und 6.x in dem Relevanzgebiet 4 lassen sich in zwei Klassen einteilen. In der ersten Klasse 5.x sind die Fahrzeuge 5.1 bis 5.8, die an der drahtlosen Fahrzeug-zu-Fahrzeug-Kommunikation teilnehmen. Daher senden die Fahrzeuge 5.1 bis 5.8 kontinuierlich CAM-Nachrichten aus. Diese Nachrichten beinhalten unter anderem Information über die gerichtete Geschwindigkeit und die Position der Fahrzeuge.

In der zweiten Klasse 6.x sind die Fahrzeuge 6.1 bis 6.6, die nicht an der Fahrzeug-zu-Fahrzeug-Kommunikation teilnehmen. Mit den Fahrzeugen der zweiten Klasse 6.x findet also keine direkte Kommunikation statt. Ein Informationsaustausch zwischen den Fahrzeugen der Klasse 5 und 6 findet daher höchstens indirekt statt, beispielsweise über den Abstand zu einem benachbarten Fahrzeug der ersten Klasse 5, der durch ein Fahrzeug der ersten Klasse 5 erfasst und ausgesendet wird. Allerdings werden diese Fahrzeuge 6.1 bis 6.6 in der Regel nicht an dem erfindungsgemäßen Verfahren teilnehmen können, da es an der notwendigen Kommunikationsmöglichkeit fehlt. Daher werden diese Fahrzeuge 6.1 bis 6.6 auch nicht als Umgebungsfahrzeuge im Sinne der Erfindung bezeichnet.

Von den dargestellten Umgebungsfahrzeugen haben die Fahrzeuge 5.1, 5.6, 5.7 und 6.2 den Warnblinker aktiviert und indizieren damit eine Gefährdungssituation, die durch die Fahrer der anderen Fahrzeuge nun leichter erkannt werden kann.

Die Fahrzeuge 6.6, 6.4 und 5.2 befinden sich auf der äußeren Fahrspur 2.1, die bei Rechtsverkehr dem Mitteltrennstreifen am nächsten ist. Die Fahrzeuge 5.8, 5.7, 5.5, 5.4, 6.2 und 6.1 befinden sich in Fahrtrichtung direkt vor dem Ego-Fahrzeug A auf der mittleren Fahrspur 2.2. Auf der Fahrspur 2.3 und damit in der Nähe eines eventuellen Notfallstreifens befinden sich die Fahrzeuge 6.5, 5.6, 6.3, 5.3 und 5.1. Am weitesten entfernt von dem Ego-Fahrzeug A und damit am entferntesten Rand des Relevanzgebietes 4 liegen die Fahrzeuge 5.1, 5.2 und 6.1, von denen jedoch nur zwei Fahrzeuge 5.1 und 5.2 an der drahtlosen Fahrzeug-zu-Fahrzeug-Kommunikation teilnehmen. Der Abstand der Fahrzeugen 5.1, 5.2 zu dem Ego-Fahrzeug 1 entspricht etwa gerade der Reichweite der Fahrzeug-zu-Fahrzeug-Kommunikation, so dass das Ego-Fahrzeug A CAM-Nachrichten dieser Fahrzeuge 5.1, 5.2 empfangen kann.

Bei dem erfindungsgemäßen Verfahren werden durch den Empfang der CAM-Nachrichten automatisch zuerst die Umgebungsfahrzeuge ausgewählt, die an der Fahrzeug-zu-Fahrzeug-Kommunikation teilnehmen, die also der Klasse 5.x angehören. Anschließend wird geprüft, ob die Fahrzeuge im Relevanzgebiet 4 liegen. Dies geschieht anhand der Positionswerte, die durch die CAM-Nachrichten übertragen werden. Es wird überprüft, ob die übertragenen Positionswerte innerhalb des Bereichs des Relevanzgebietes 4 liegen. Ist dies der Fall, so werden die entsprechenden Fahrzeuge respektive ihre Geschwindigkeits- und Positionswerte ausgewählt und in dem weiteren Verfahren berücksichtigt.

Die Positionswerte der Umgebungsfahrzeuge werden als 2-Tupel $P_j = (L_j(t_i), B_j(t_i))$ erfasst. Der Index j läuft von $j = 1, 2...8$ und bezeichnet die Fahrzeuge der ersten Klasse 5.x. Durch den 2-Tupel $P_j$ werden die Positionswerte als Längengrad $L_j$ und Breitengrad $B_j$ in einem globalen Navigationssystem zu dem Zeitpunkt $t_i$ dargestellt. Alternativ kommt auch eine andere Koordinatendarstellung in Frage, die dann auch in der weiteren Beschreibung an die Stelle der 2-Tupel $P_j$ tritt. Die Werte sind zusammen mit deren Messgenauigkeit G bekannt. Die Messgenauigkeit G kann beispielsweise bei der Übermittlung mit übertragen werden. Entsprechend der Messgenauigkeit ist die Positionsgenauigkeit beispielsweise bedingt durch eine prinzipiell fehlerbehaftete Erfassung der Position durch ein globales Navigationssystem bzw. Ortungssystem. Dies liegt daran, dass die Positionsdaten bzw. die Daten, aus denen die Position ermittelt wird, mit einer Unschärfe behaftet sind.

Ebenso wie die Positionswerte $P_j$ werden auch die Geschwindigkeitswerte $V_j(t_i)$ zusammen mit ihrer Genauigkeit G übertragen. Bei der Genauigkeit G der Geschwindigkeit wird beispielsweise eine Ungenauigkeit der Messung in dem individuellen Fahrzeug berücksichtigt.

In Tabelle 1 sind die entsprechenden Werte von drei Fahrzeugen aus dem Relevanzgebiet dargestellt, in dem sich allgemein n-Fahrzeuge befinden, so dass die Werte aller diese n-Fahrzeuge in der Tabelle aufgeführt sind.

| Fahrzeug Nr. | Geschwindigkeit | Genauigkeit der Geschwindigkeit | Position: Längengrad, Breitengrad | Genauigkeit der Position |
|---|---|---|---|---|
| 1 | $V_1(t_1)$ | $G_1(v_1, t_1)$ | $L_1(t_1), B_1(t_1)$ | $G_1(p_1, t_1)$ |
| 2 | $V_2(t_1)$ | $G_2(v_2, t_1)$ | $L_2(t_1), B_2(t_1)$ | $G_2(p_2, t_1)$ |
| 3 | $V_3(t_1)$ | $G_3(v_3, t_1)$ | $L_3(t_1), B_3(t_1)$ | $G_3(p_3, t_1)$ |
| ... | | | | |

Aus den so bekannten Positionswerten der Umgebungsfahrzeuge 5.x und des Ego-Fahrzeugs A kann der Abstand $S_j$ der Umgebungsfahrzeuge 5.x zu dem Ego-Fahrzeug A zum Zeitpunkt $t_i$ berechnet werden. Die Umgebungsfahrzeuge 5.x werden zusammen mit den Abständen $S_j$ in Tabelle 2 eingeordnet und in Abhängigkeit von dem Abstand $S_j$ zum Ego-Fahrzeug A absteigend sortiert.

| Fahrzeug Nr. | Abstand zum Ego-Fahrzeug A |
|---|---|
| 1 | $S_1(t_1)$ |
| 2 | $S_2(t_1)$ |
| 3 | $S_3(t_1)$ |
| 4 | $S_4(t_1)$ |
| N | $S_n(t_1)$ |

Im nächsten Schritt werden die so ausgewählten und in der Tabelle 2 sortierten Umgebungsfahrzeuge 5.x, d. h. die Fahrzeuge 5.1 bis 5.N, virtuellen Fahrzeugen (B, C) zugeordnet. Die Umgebungsfahrzeuge 5.x am Anfang der vorstehenden Tabelle befinden sich am fernen Rand des Relevanzgebietes 4 und sind daher am weitesten entfernt von dem Ego-Fahrzeug A. Diese Umgebungsfahrzeuge 5.x können einen Stau bzw. eine Stauendposition prinzipiell früher erreichen als die Umgebungsfahrzeuge 5.x, die sich näher zum Ego-Fahrzeug A befinden. Einerseits ist es zur Erreichung einer guten Statistik wünschenswert, möglichst viele Umgebungsfahrzeuge 5.x in einem virtuellen Fahrzeug zu berücksichtigen, andrerseits wird durch die Mittelwertbildung auch die Vorhersagegenauigkeit für einen Stau reduziert, da die einzelnen Werte an Bedeutung verlieren.

Daher werden einem zweiten virtuellen Fahrzeug B lediglich die Teilmenge der drei am weitesten entfernten Umgebungsfahrzeuge 5.1, 5.2 und 5.3 zugeordnet. Dies hat sich erfahrungsgemäß als eine gute Abwägung zwischen Statistik und Vorhersagegenauigkeit herausgestellt.

Konkret werden die Umgebungsfahrzeuge 5.x einem virtuellen Fahrzeug B, C zugeordnet, indem aus den Positionswerten der jeweils ausgewählten Umgebungsfahrzeuge 5.x der gewichtete Mittelwert gebildet wird. Die Gewichtung erfolgt mit der Genauigkeit G, mit der die Positionswerte bekannt sind bzw. gemessen wurden.

Für das zweite virtuelle Fahrzeug B wird das 2-Tupel ($L_B(t_i)$, $B_B(t_i)$) einzeln für den Längengrad $L_B(t_i)$ und den Breitengrad $B_B(t_i)$ mit den nachstehenden Formeln F.1 und F.2 ermittelt:

$$L_B(ti) = \frac{L_1(t_i)*G_1(p_1,t_i) + L_2(t_i)*G_2(p_2,t_i) + L_3(t_i)*G_3(p_3,t_i)}{G_1(p_1,t_i)*G_2(p_2,t_i) + G_3(p_3,t_i)} \qquad (F.1)$$

$$B_B(ti) = \frac{B_1(t_i)*G_1(p_1,t_i) + B_2(t_i)*G_2(p_2,t_i) + B_3(t_i)*G_3(p_3,t_i)}{G_1(p_1,t_i) + G_2(p_2,t_i) + G_3(p_3,t_i)} \qquad (F.2)$$

Das Vorgehen bei der Zuordnung der Geschwindigkeit $V_B(t_i)$ des virtuellen Fahrzeug B zum Zeitpunkt $t_i$ erfolgt analog zu dem Vorgehen bei der Zuordnung des Positionswertes. Dazu wird die nachstehende Formel F.3 verwendet, in der die Geschwindigkeiten der Umgebungsfahrzeuge 5.1, 5.2 und 5.3 und die Genauigkeit, mit der diese ermittelt wurden, eingehen:

$$V_B(ti) = \frac{V_1(t_i)*G_1(v_1,t_i) + V_2(t_i)*G_2(v_2,t_i) + V_3(t_i)*G_3(v_3,t_i)}{G_1(v_1,t_i) + G_2(v_2,t_i) + G_3(v_3,t_i)} \qquad (F.3)$$

Im nächsten Schritt wird ein erstes virtuelles Fahrzeug C definiert. Diesem werden die alle Umgebungsfahrzeuge 5.x zugeordnet, die an der Fahrzeug-zu-Fahrzeug-Kommunikation teilnehmen und die sich in dem Relevanzgebiet befinden. Daher repräsentiert das virtuelle Fahrzeug C alle Fahrzeuge der Klasse 5.x. Die entsprechenden Positions- und Geschwindigkeitswerte sind in der nachstehenden Tabelle dargestellt.

| Fahrzeug Nr. | Geschwindigkeit | Genauigkeit der Geschwindigkeit | Position: Längengrad, Breitengrad | Genauigkeit der Position |
|---|---|---|---|---|
| 1 | $V_1(t_1)$ | $G_1(v_1, t_1)$ | $L_1(t_1)$, $B_1(t_1)$ | $G_1(p_1, t_1)$ |
| 2 | $V_2(t_1)$ | $G_2(v_2, t_1)$ | $L_2(t_1)$, $B_2(t_1)$ | $G_2(p_2, t_1)$ |
| 3 | $V_3(t_1)$ | $G_3(v_3, t_1)$ | $L_3(t_1)$, $B_3(t_1)$ | $G_3(p_3, t_1)$ |
| 4 | $V_4(t_1)$ | $G_4(v_4, t_1)$ | $L_4(t_1)$, $B_3(t_1)$ | $G_4(p_4, t_1)$ |
| ... | ... | ... | ... | ... |
| n | $V_n(t_1)$ | $G_n(v_n, t_1)$ | $L_n(t_1)$, $B_n(t_1)$ | $G_n(p_n, t_1)$ |

Die Zuordnung der Umgebungsfahrzeuge 5.1 bis 5.8 zu dem ersten virtuellen Fahrzeug C erfolgt wie die Zuordnung der Umgebungsfahrzeuge 5.1 bis 5.3 zu dem zweiten virtuellen Fahrzeug B. Demnach entsprechen die Geschwindigkeits- und Positionswerte des virtuellen Fahrzeuges C dem gewichteten Mittel der Geschwindigkeits- und Positionswerte aller Fahrzeuge der ersten Klasse 5. Für diese Berechnung werden also analog die Formeln F.4, F.5 und F.6 verwendet:

$$V_c(t_i) = \frac{\sum_{x=1}^{n}(V_x(t_i)*G_x(v_x,t_i))}{\sum_{x=1}^{n}(G_x(v_x,t_i))} \qquad (F.4)$$

$$L_c(t_i) = \frac{\sum_{x=1}^{n}(L_x(t_i) * G_x(p_x, t_i))}{\sum_{x=1}^{n}(G_X(p_x, t_i))} \qquad (F.5)$$

$$B_c(t_i) = \frac{\sum_{x=1}^{n}(B_x(t_i) * G_x(p_x, t_i))}{\sum_{x=1}^{n}(G_x(p_x, t_i))} \qquad (F.6)$$

Die Werte der so erstellten virtuellen Fahrzeuge B und C sind zusammen mit denen des Ego-Fahrzeuges A in der nachstehenden Tabelle aufgeführt. Durch diese Zusammenfassung der Umgebungsfahrzeuge 5.x zu zwei verschiedenen virtuellen Fahrzeugen B, C konnte die Komplexität der Verkehrssituation in der Darstellung deutlich reduziert werden. Dies ist auch aus Fig. 2, welche die vorstehend ermittelten virtuellen Fahrzeuge B, C und das Ego-Fahrzeug A darstellt, im Vergleich zu Fig. 1 ersichtlich.

| Fahrzeug | Bemerkungen | Geschwindigkeit, Position |
|---|---|---|
| A | Ego Fahrzeug | $V_A(t_i)$, $(L_A(t_i), B_A(t_i))$ |
| B | Abbildungen der ersten 3 Fahrzeuge aus Tabelle 1 | $V_B(t_i)$, $(L_B(t_i), B_B(t_i))$ |
| C | Abbildungen aller Fahrzeuge Tabelle 1 | $V_C(t_i)$, $(L_C(t_i), B_C(t_i))$ |

In Fig. 2 ist auch gezeigt, dass der Positionswert des virtuellen Fahrzeugs B nicht auf der mittleren Fahrspur 2.2 liegt, sondern leicht zur Fahrspur 2.3 hin versetzt ist. Dies liegt daran, dass sich die Fahrzeuge 5.1 und 5.3 auf der äußeren Fahrspur 2.3 und nur das Fahrzeug 5.2 auf der äußeren Fahrspur 2.1 befinden.

Im nächsten Schritt werden die Geschwindigkeits- und Positionswerte zu verschiedenen Zeitpunkten $t_i$ erfasst, mit i = 1, 2,...m. Der Index bezeichnet eine fortlaufende natürliche Zahl. Dadurch kann die Beschleunigung $a_x(t_i)$ aus zeitlich aufeinanderfolgenden Geschwindigkeiten der virtuellen Fahrzeuge x = B, C ermittelt werden. Die Ermittlung der Beschleunigung von einem Fahrzeug erfolgt anhand der nachstehenden Formel F.7. Für die Berechnung der Beschleunigung sind notwendigerweise die Geschwindigkeitswerte zu zwei unterschiedlichen Zeitpunkten notwendig.

$$a_x(t_{i+1}) = \frac{V_x(t_{i+1}) - V_x(t_i)}{(t_{i+1} - t_i)} \qquad (F.7)$$

Neben der Beschleunigung *a* kann auch der Abstand der virtuellen Fahrzeuge zueinander $S_{xy}$ sowie deren Abstand zu dem Ego-Fahrzeug zu verschiedenen Zeiten erfasst werden.

x, y sind dabei Indices, die das Fahrzeug kennzeichnen. Sie können in dem beschriebenen Beispiel also die Werte A, B, C annehmen.

Der Abstand $S_{xy}$ ergibt sich aus der Differenz der Positionswerte der einzelnen Fahrzeuge. Die Differenz wird getrennt für den Positionswert des Längengrades L und des Breitengrades B ermittelt. Aus diesen Abständen wird auch die Summe der Abstände zueinander erfasst $S_{abc}(t_i)$. Hierin ist der Abstand des virtuellen Fahrzeuges C jeweils zu dem virtuellen Fahrzeug B und zu dem Ego-Fahrzeug A berücksichtigt.

Diese Daten sind zu den drei Zeitpunkten $t_1$, $t_2$ und $t_3$ in der nachstehenden Tabelle dargestellt.

| Zeitpunkt | Beschleunigung | Summe des Abstands | Warnabstand |
|---|---|---|---|
| $t_1$ | | $S_{abc}(t_1) = S_{bc}(t_1) + S_{ac}(t_1)$ | $S_{warn}(B, t_1)$, $S_{warn}(C, t_1)$ |
| $t_2$ | $a_B(t_2)$, $a_C(t_2)$ | $S_{abc}(t_2) = S_{bc}(t_2) + S_{ac}(t_2)$ | $S_{warn}(B, t_2)$, $S_{warn}(C, t_2)$ |
| $t_3$ | $a_B(t_3)$, $a_C(t_3)$ | $S_{abc}(t_3) = S_{bc}(t_3) + S_{ac}(t_3)$ | $S_{warn}(B, t_3)$, $S_{warn}(C, t_3)$ |

Im nächsten Schritt wird die Beschleunigung analysiert. Sobald die ermittelte Beschleunigung negativ ist, handelt es sich um eine Verzögerung des Fahrzeuges. Liegt die Verzögerung unterhalb einer vordefinierten, negativen Schwelle, deren Betrag bei 2 m/s² liegt, so wird dies als ein Bremsvorgang des virtuellen Fahrzeuges gewertet, der auf einen Stau hinweist.

Unter der Annahme, dass das Fahrzeug diese Verzögerung konstant beibehält, wird ein Warnabstand $S_{warn}$ anhand der nachstehenden Formel F.8 berechnet;

$$S_{warn}(X, t_i) = \frac{V_x(t_i)^2}{2 * a_x(t_i)} \qquad (F.8)$$

Der Warnabstand $S_{warn}$ entspricht der Strecke, die das virtuelle Fahrzeug X = B, C benötigt, um seine Geschwindigkeit $V_x$ auf null zu reduzieren. Daher wird der Warnabstand $S_{warn}$ auch als Anhalteweg bezeichnet. Es wird dann vermutet, dass das Stauende SE dort ist, wo das Fahrzeug stoppen würde. Der Warnabstand $S_{warn}$ gibt daher den momentanen Abstand zwischen dem virtuellen Fahrzeug B, C und dem ungefähren Stauende SE an. Der Warnabstand $S_{warn}$ ist zu verschiedenen Zeiten $t_i$ ebenfalls in die vorstehende Tabelle aufgenommen.

Ausgehend von dem Warnabstand kann das vermutete Stauende SE aus Sicht des Ego-Fahrzeuges A anhand der nachstehenden Formeln F.9 und F.10 berechnet werden. Die Position des Stauendes SE verändert sich in Abhängigkeit von der Zeit $t_i$ und dem virtuellen Fahrzeug B, C, auf dessen Grundlage die Berechnung stattgefunden hat.

$$SE(B, t_i) = S_{BA}(t_i) + S_{warn}(B, t_i) \qquad (F.9)$$

$$SE(C, t_i) = S_{CA}(t_i) + S_{warn}(C, t_i) \qquad (F.10)$$

Die Genauigkeit der Berechnung des Stauendes SE verbessert sich mit fortschreitender Zeit $t_i$. Dies liegt daran, dass sich die Fahrzeuge, mit fortschreitender Zeit an das tatsächliche Stauende SE annähern und deren Verzögerungsprozesse zunehmend an die Stausituation angepasst werden. Dies macht die Stauendeberechnung basierend auf der Verzögerung der beiden virtuellen Fahrzeuge zuverlässiger. Es ist daher auch zu erwarten, dass die Abschätzung SE(B, t) genauer als SE(C, t) wird.

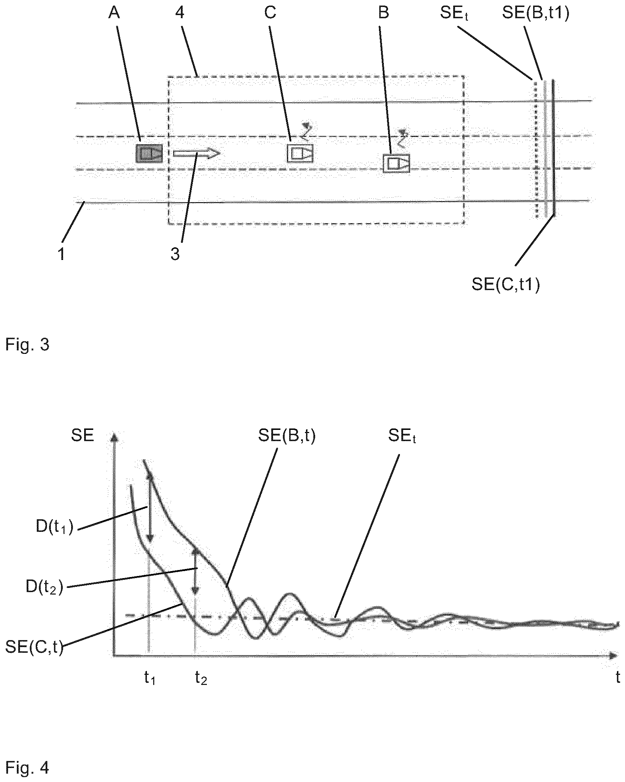

In Fig. 3 ist die in Fig. 2 dargestellte Situation zu einem späteren Zeitpunkt $t_2$ gezeigt. Es ist deutlich zu erkennen, dass die unterschiedlichen erwarteten Stauenden SE(B, $t_2$) und SE(C, $t_2$) sich im Vergleich zu den Stau-Enden zum Zeitpunkt $t_1$ dem tatsächlichen Stau-Ende $SE_t$ annähern.

Diese Stauenden SE(X, $t_i$) wird für die virtuellen Fahrzeuge X = B, C zu verschiedenen Zeiten $t_i$ erfasst und abgespeichert. So kann die Position des Stauendes SE kontinuierlich angepasst werden. Hierdurch ist es möglich, eine dynamische Verschiebung des Stauendes SE abzubilden. Diese entsteht beispielsweise bei der Staubildung in Rückwärtsrichtung und bei der Stauauflösung in Vorwärtsrichtung.

In Fig. 4 ist der daraus resultierende Graph der vermuteten Stauenden SE über der Zeit $t_i$ aufgetragen. Der Graph in Fig. 4 zeigt den Abstand der virtuellen Fahrzeuge B, C bis zum vermuteten Stauende SE. Wie bereits aus Fig. 2 und Fig. 3 ersichtlich war, nähern sich die vermuteten Stauenden SE mit fortschreitender Zeit aneinander an und konvergieren zum tatsächlichen Stauende $SE_t$ hin, falls sich die Fahrzeuge tatsächlich auf einen Stau zubewegen. Dabei konvergiert auch die Distanz zwischen den erwarteten Stauenden SE(B, $t_i$) und SE(C, $t_i$) mit fortschreitender Zeit $t_i$.

Anhand der derart ermittelten Daten und deren zeitlicher Analyse werden mehrere Kriterien aufgestellt, die auf eine gefährliche Situation hinweisen. Insbesondere in der Zusammenschau sind die Kriterien aber charakteristisch für einen Stau, der sich im oder kurz vor dem Relevanzgebiet 4 bildet bzw. gebildet hat.

Als erstes Staukriterium dient die zeitliche Analyse der Geschwindigkeiten. Eine Reduzierung zuerst der Geschwindigkeit des Fahrzeug B und dann der Geschwindigkeit von Fahrzeug C weist auf eine gefährliche Situation hin.

Zusätzlich wird die Summe der Abstände $S_{abc}$ zwischen den Fahrzeugen A, B und C analysiert und als zweites Staukriterium herangezogen. Verkleinert sich $S_{abc}$ mit fortschreitender Zeit $t_i$ stetig, so zeigt dies eine gefährliche Situation an.

Das dritte Staukriterium nutzt das zeitliche Konvergieren der ermittelten Stauenden SE. Dazu wird eine Differenz D($t_i$) zu verschiedenen Zeiten zwischen den unterschiedlichen Stauendpositionen SE(X), X = A, B gebildet. Durch den zeitlichen Verlauf der Differenz D($t_i$) kann eine gefährliche Situation erkannt werden. Ein potentieller Stau zeigt sich darin, dass die Differenz D mit fortschreitender Zeit gegen null konvergiert bzw. kleiner als ein bestimmter Schwellenwert wird.

Die drei Staukriterien sind in Tabelle 6 zusammengefasst. Sobald alle drei Kriterien erfüllt sind, wird die Situation sofort als ein Stau-Ende erkannt.

| Staukriterium Nr. | Bedingung |
|---|---|
| 1 | $a_x(t_i) \leq 0$; i = 1, 2, 3; x = B, C |
| 2 | $S_{abc}(t_1) \geq S_{abc}(t_2) \geq S_{abc}(t_3)$ |
| 3 | SE(B, $t_i$) und SE(C, $t_i$) konvergieren im zeitlichen Ablauf, D→0 |

Liegt eine Verkehrssituation vor, in der sich lediglich fünf oder weniger Umgebungsfahrzeuge 5.x in dem Relevanzgebiet 4 befinden, kann eine leicht modifizierte Variation des vorstehend beschriebenen Verfahrens durchgeführt werden.

In diesem zweiten Ausführungsbeispiel wird im Unterschied zu dem ersten Ausführungsbeispiel kein virtuelles Fahrzeug B aus den am weitesten entfernten Fahrzeugen ermittelt. Aufgrund der geringen Anzahl von Umgebungsfahrzeugen wäre das virtuelle Fahrzeug B zeitlich und räumlich nicht mehr repräsentativ für die "frühzeitige Stauende-Erkennung". Der Großteil der Umgebungsfahrzeuge 5.x, die durch zwei virtuelle Fahrzeuge B, C repräsentiert würden, wäre identisch. Daher ist eine Unterscheidung zwischen Umgebungsfahrzeugen 5.x, die sich am fernen Rand des Relevanzgebiets 4 befinden, und den anderen Umgebungsfahrzeugen 5.x im Relevanzgebiet 4 nicht mit einem Zugewinn an Vorhersagegenauigkeit verbunden.

Die Staukriterien werden demnach leicht modifiziert. Bei der zeitlichen Betrachtung der Abstände der Fahrzeuge untereinander wird lediglich der Abstand des virtuellen Fahrzeuges C zu dem EGO-Fahrzeug betrachtet. Ebenso wird das Stauende nur anhand des virtuellen Fahrzeuges C berechnet.

| Staukriterium Nr. | Bedingung |
|---|---|
| 1 | $a_C(t_i) \leq 0$; i = 1, 2, 3 |
| 2 | $S_{ac}(t_1) \geq S_{ac}(t_2) \geq S_{ac}(t_3)$ |
| 3 | SE(C, $t_i$) konvergieren im zeitlichen Ablauf, |

## Patentansprüche

1. Verfahren zur Stauerkennung mittels einer drahtlosen Fahrzeug-zu-Fahrzeug-Kommunikation, bei dem ein Ego-Fahrzeug (A), in dem das Verfahren zur Stauerkennung durchgeführt wird, Geschwindigkeits- und Positionswerte von im Empfangsgebiet der Fahrzeug-zu-Fahrzeug-Kommunikation befindlichen Umgebungsfahrzeugen (5.x) empfängt und bei dem die folgenden Verfahrensschritte ausgeführt werden:

   - Überprüfen einer Relevanz für Umgebungsfahrzeuge (5.x), von denen das Ego-Fahrzeug (A) Nachrichten empfängt, durch Vergleich mit Relevanzkriterien und Feststellen einer Relevanz bei Erfüllen der Relevanzkriterien, wobei als Relevanzkriterien ein Relevanzgebiet definiert wird;
   - Auswählen der relevanten Umgebungsfahrzeugen (5.x) zugeordneten Geschwindigkeits- und Positionswerte, deren Geschwindigkeitswerte eine zu dem Ego-Fahrzeug (A) gleiche Fahrrichtung (3) anzeigen;

   **dadurch gekennzeichnet, dass**

   - ein Definieren mindestens eines ersten virtuellen Fahrzeuges (B, C), dem die Mittelwerte zumindest eines Teils der oder aller ausgewählten Geschwindigkeits- und Positionswerte als Geschwindigkeits- und Positionswerte des virtuellen Fahrzeugs (B, C) zugeordnet werden;
   - ein Erfassen des zeitlichen Verlaufs der Geschwindigkeits und Positionswerte des virtuellen Fahrzeugs (B, C) ;
   - ein Erfassen des zeitlichen Verlaufs von Änderungen der Geschwindigkeits- und Positionswerte des virtuellen Fahrzeugs (B, C) als mindestens ein Änderungswert;
   - ein Vergleichen des Änderungswerts mit mindestens einem vorgegebenen Staukriterium;
   - in einem virtuellen Fahrzeug (C) alle ausgewählten Geschwindigkeits- und Positionswerte erfasst werden; erfolgt.

2. Verfahren nach Anspruch 1, **dadurch gekennzeichnet, dass** in einem anderen virtuellen Fahrzeug (B) eine Teilauswahl der ausgewählten Geschwindigkeits- und Positionswerten erfasst wird, wozu insbesondere eine vorgegebene Anzahl derjenigen Geschwindigkeits- und Positionswerte herangezogen wird, deren Positionswerte den größten Abstand (S) zu dem Ego-Fahrzeug (A) aufweisen.

3. Verfahren nach einem der vorhergehenden Ansprüche, **dadurch gekennzeichnet, dass** aus dem Positionswert des Ego-Fahrzeug (A) und dem Positionswert eines Umgebungsfahrzeugs der Abstand zu dem Ego-Fahrzeug (A) bestimmt wird und dass die Geschwindigkeits- und Positionswerte nach ab- oder ansteigendem Abstand von dem Ego-Fahrzeug (A) in einer Tabelle sortiert und gespeichert werden.

4. Verfahren nach einem der vorhergehenden Ansprüche, **dadurch gekennzeichnet, dass** als ein Änderungswert eine Beschleunigung des virtuellen Fahrzeugs (B, C) aus zwei zeitlich aufeinander folgenden zugeordneten Geschwindigkeitswerten des virtuellen Fahrzeugs (B, C) ermittelt wird.

5. Verfahren nach Anspruch 5, **dadurch gekennzeichnet, dass** der zeitliche Versatz der Beschleunigung der virtuellen Fahrzeuge (B, C) als Änderungswert berücksichtigt wird.

6. Verfahren nach einem der vorhergehenden Ansprüche, **dadurch gekennzeichnet, dass** als ein Änderungswert die Summe der Abstände ($S_{abc}$) mindestens eines virtuellen Fahrzeugs (B, C) zu dem Ego-Fahrzeug (A) und/oder zu einem anderen virtuellen Fahrzeug (B, C) gebildet wird, der in einem Staukriterium berücksichtigt wird.

7. Verfahren nach einem der vorhergehenden Ansprüche, **dadurch gekennzeichnet, dass** als ein Änderungswert ein erwartetes Stauende (SE) für ein virtuelles Fahrzeug (B, C) abgeschätzt wird, das in einem Staukriterium berücksichtigt wird.

8. Verfahren nach Anspruch 7, **dadurch gekennzeichnet, dass** aus zeitlich aufeinander folgenden zugeordneten Geschwindigkeitswerten des virtuellen Fahrzeugs eine Beschleunigung (a) des virtuellen Fahrzeugs (B, C) ermittelt wird und hieraus unter der Annahme, dass das virtuelle Fahrzeug (B, C) mit dieser Beschleunigung bis zum Stillstand abbremst, ein Warnabstand ($S_{warn}$) für die Entfernung der zugeordneten Position des virtuellen Fahrzeugs (B, C) bis zu einem möglichen Stillstand des virtuellen Fahrzeugs (B, C) ermittelt wird, und dass das erwartete Stauende aus dem Warnabstand und dem Abstand des Ego-Fahrzeug (A) zu dem virtuellen Fahrzeug (B, C) ermittelt wird.

9. Verfahren nach einem der vorhergehenden Ansprüche, **dadurch gekennzeichnet, dass** eine Genauigkeit (G), mit der Geschwindigkeits- und Positionswerte der Umgebungsfahrzeuge (5.x) erfasst werden, ermittelt wird und dass die Genauigkeit (G) bei der Ermittlung der Mittelwerte der Geschwindigkeits- und Positionswerte, die dem virtuellen Fahrzeugen (B, C) zugewiesen sind, berücksichtigt wird.

10. Vorrichtung zur Stauerkennung in einem Ego-Fahrzeug (A) mit einem Kommunikationssystem, das mit Umgebungsfahrzeugen (5.x) in einem Empfangsgebiet um das Ego-Fahrzeug (A) in einer drahtlosen Fahrzeug-zu-Fahrzeug-Kommunikation Informationen austauscht, und einer Recheneinheit, **dadurch gekennzeichnet, dass** die Recheneinheit zur Durchführung des Verfahrens nach einem der Ansprüche 1 bis 9 eingerichtet ist.

**Claims**

1. Method for queue recognition by means of wireless vehicle-to-vehicle communication, in which an ego vehicle (A), in which the method for queue recognition is performed, receives speed and position values from surrounding vehicles (5.x) situated in the reception area of the vehicle-to-vehicle communication and in which the following method steps are executed:

   - a relevance for surrounding vehicles (5.x) from which the ego vehicle (A) receives messages is checked by means of comparison with relevance criteria and a relevance is established if the relevance criteria are satisfied, wherein a relevance region is defined as relevance criteria;
   - the speed and position values that are associated with relevant surrounding vehicles (5.x) and have the speed values indicating a direction of travel (3) that is the same as that of the ego vehicle (A) are selected;

   **characterized in that** the following is effected

   - defining of at least one first virtual vehicle (B, C) to which the mean values of at least one portion of the or all the selected speed and position values are allocated as speed and position values for the virtual vehicle (B, C);

- recording of the time profile of the speed and position values of the virtual vehicle (B, C);
- recording of the time profile of changes in the speed and position values of the virtual vehicle (B, C) as at least one change value;
- comparing of the change value with at least one prescribed queue criterion;
- all the selected speed and position values are recorded in one virtual vehicle (C).

2. Method according to Claim 1, **characterized in that** a subselection of the selected speed and position values is recorded in another virtual vehicle (B), for which purpose particularly a prescribed number of those speed and position values in which the position values have the greatest distance (S) to the ego vehicle (A) is used.

3. Method according to one of the preceding claims, **characterized in that** the distance to the ego vehicle (A) is determined from the position value of the ego vehicle (A) and the position value of a surrounding vehicle and **in that** the speed and position values are sorted and stored in a table according to decreasing or increasing distance from the ego vehicle (A).

4. Method according to one of the preceding claims, **characterized in that** an acceleration of the virtual vehicle (B, C) is ascertained as a change value from two temporally successive associated speed values for the virtual vehicle (B, C).

5. Method according to Claim 4, **characterized in that** the time offset in the acceleration of the virtual vehicles (B, C) is taken into account as a change value.

6. Method according to one of the preceding claims, **characterized in that** the sum of the distances ($S_{abc}$) from at least one virtual vehicle (B, C) to the ego vehicle (A) and/or to another virtual vehicle (B, C) is formed as a change value, said change value being taken into account in a queue criterion.

7. Method according to one of the preceding claims, **characterized in that** an expected queue end (SE) is estimated for a virtual vehicle (B, C) as a change value and is taken into account in a queue criterion.

8. Method according to Claim 7, **characterized in that** an acceleration (a) of the virtual vehicle (B, C) is ascertained from temporally successive associated speed values for the virtual vehicle, and a warning distance ($S_{warn}$) for the range of the associated position of the virtual vehicle (B, C) up to a possible standstill of the virtual vehicle (B, C) is ascertained from said acceleration, on the assumption that the virtual vehicle (B, C) with this acceleration brakes to a standstill, and **in that** the expected queue end is ascertained from the warning distance and the distance from the ego vehicle (A) to the virtual vehicle (B, C).

9. Method according to one of the preceding claims, **characterized in that** an accuracy (G) with which speed and position values for the surrounding vehicles (5.x) are recorded is ascertained and **in that** the accuracy (G) is taken into account for the ascertainment of the mean values of the speed and position values that are associated with the virtual vehicles (B, C).

10. Apparatus for queue recognition in an ego vehicle (A) having a communication system, which interchanges information with surrounding vehicles (5.x) in a reception area around the ego vehicle (A) in a wireless vehicle-to-vehicle communication, and a computation unit, **characterized in that** the computation unit is set up to perform the method according to one of Claims 1 to 9.

**Revendications**

1. Procédé de reconnaissance d'embouteillage au moyen d'une communication de véhicule à véhicule sans fil, dans lequel un égo-véhicule (A), dans lequel est mis en oeuvre le procédé de reconnaissance d'embouteillage, reçoit des valeurs de vitesse et de position de la part des véhicules environnants (5.x) qui se trouvent dans le domaine de réception de la communication de véhicule à véhicule et dans lequel les étapes suivantes sont exécutées :

- contrôle d'une pertinence pour les véhicules environnants (5.x) de la part desquels l'égo-véhicule (A) reçoit des messages par une comparaison avec des critères de pertinence et constatation d'une pertinence lorsque les critères de pertinence sont satisfaits, les critères de pertinence définis étant un domaine de pertinence ;
- sélection des valeurs de vitesse et de position associées aux véhicules environnants (5.x) pertinents, dont les valeurs de vitesse indiquent un sens de circulation (3) identique à celui de l'égo-véhicule (A) ;

**caractérisé en ce que** sont effectuées

- une définition d'au moins un premier véhicule virtuel (B, C) auquel sont associées les valeurs moyennes d'au moins une partie de la ou de toutes les valeurs de vitesse et de position choisies en tant que valeurs de vitesse et de position du véhicule virtuel (B, C) ;
- une acquisition du tracé dans le temps des valeurs de vitesse et de position du véhicule virtuel (B, C) ;
- une acquisition du tracé dans le temps des variations des valeurs de vitesse et de position du véhicule virtuel (B, C) sous la forme d'au moins une valeur de variation ;
- une comparaison de la valeur de variation avec au moins un critère d'embouteillage prédéfini ;
- toutes les valeurs de vitesse et de position sélectionnées sont acquises dans un véhicule virtuel (C).

2. Procédé selon la revendication 1, **caractérisé en ce qu'**une sélection partielle des valeurs de vitesse et de position est acquise dans un autre véhicule virtuel (B), un nombre prédéfini des valeurs de vitesse et de position dont les valeurs de position présentent l'écart (S) le plus grand par rapport à l'égo-véhicule (A) étant notamment utilisé à cet effet.

3. Procédé selon l'une des revendications précédentes, **caractérisé en ce que** l'écart par rapport à l'égo-véhicule (A) est déterminé à partir de la valeur de position de l'égo-véhicule (A) et de la valeur de position d'un véhicule environnant, et **en ce que** les valeurs de vitesse et de position sont triées et mises en mémoire dans un tableau en fonction de l'écart décroissant ou croissant de l'égo-véhicule (A).

4. Procédé selon l'une des revendications précédentes, **caractérisé en ce qu'**une valeur de variation est une accélération du véhicule virtuel (B, C) déterminée à partir de deux valeurs de vitesse associées successives dans le temps du véhicule virtuel (B, C).

5. Procédé selon la revendication 4, **caractérisé en ce que** le décalage dans le temps de l'accélération des véhicules virtuels (B, C) est pris en compte en tant que valeur de variation.

6. Procédé selon l'une des revendications précédentes, **caractérisé en ce qu'**une valeur de variation est la somme calculée des écarts ($S_{abc}$) d'au moins un véhicule virtuel (B, C) par rapport à l'égo-véhicule (A) et/ou à un autre véhicule virtuel (B, C), laquelle est prise en compte dans un critère d'embouteillage.

7. Procédé selon l'une des revendications précédentes, **caractérisé en ce qu'**une valeur de variation est une extrémité d'embouteillage attendue (SE) estimée pour un véhicule virtuel (B, C), laquelle est prise en compte dans un critère d'embouteillage.

8. Procédé selon la revendication 7, **caractérisé en ce qu'**une accélération (a) du véhicule virtuel (B, C) est déterminée à partir de valeurs de vitesse associées successives dans le temps du véhicule virtuel et, en supposant que le véhicule virtuel (B, C) freine avec cette accélération jusqu'à l'immobilisation, un écart d'avertissement ($S_{warn}$) est déterminé à partir de celle-ci pour la distance entre la position associée du véhicule virtuel (B, C) et une immobilisation possible du véhicule virtuel (B, C), et **en ce que** l'extrémité d'embouteillage attendue est déterminée à partir de l'écart d'avertissement et de l'écart entre l'égo-véhicule (A) et le véhicule virtuel (B, C).

9. Procédé selon l'une des revendications précédentes, **caractérisé en ce qu'**une précision (G) avec laquelle sont acquises les valeurs de vitesse et de position des véhicules environnants (5.x) est déterminée, et **en ce que** la précision (G) est prise en compte lors de la détermination des valeurs moyennes des valeurs de vitesse et de position qui sont attribuées aux véhicules virtuels (B, C).

10. Dispositif de reconnaissance d'embouteillage dans un égo-véhicule (A) muni d'un système de communication, lequel échange des informations dans une communication de véhicule à véhicule sans fil avec des véhicules environnants (5.x) qui se trouvent dans un domaine de réception autour de l'égo-véhicule (A), et d'une unité de calcul, **caractérisé en ce que** l'unité de calcul est conçue pour mettre en oeuvre le procédé selon l'une des revendications 1 à 9.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009074655 A1
- WO 2010028626 A
- US 20080065311 A
- DE 102010007262 A1